# FASCICULE DE BREVET EUROPEEN

(11) **EP 2 008 918 B1**
(45) Date de publication et mention de la délivrance du brevet: **30.03.2011**
(21) Numéro de dépôt: 08305174.8
(22) Date de dépôt: 16.05.2008
(51) Int. Cl.: B62D 25/16, B62D 25/18, B62D 35/00, B62D 35/02

(54) **Garde-boue de véhicule automobile et véhicule automobile associé**
Kotflügel eines Fahrzeuges und Fahrzeug
Vehicle mudguard and vehicle

(30) Priorité: 28.06.2007 FR 0756110
(43) Date de publication de la demande: 31.12.2008
(73) Titulaire: Peugeot Citroën Automobiles SA, 78140 Vélizy-Villacoublay (FR)
(72) Inventeur: Mignon, Stéphane, 78380 BOUGIVAL (FR)

(56) Documents cités:
- GB-A- 2 143 480
- US-A- 4 131 308
- US-A- 4 683 974

## Description

La présente invention concerne un garde-boue de véhicule automobile, du type comportant :
- un corps présentant une surface ; et
- un élément aérodynamique rigide distinct dudit corps, l'élément aérodynamique étant destiné à faire saillie par rapport à ladite surface.

Des éléments aérodynamiques de ce type sont par exemple disposés en avant des roues avant, transversalement au véhicule. Ils écartent ainsi une partie du flux d'air arrivant vers les roues avant de manière à réduire la traînée induite par les roues, de tels éléments peuvent également être disposés sur le soubassement comme le divulgue le document US 468 3 974.

Cependant, en cas de choc de l'élément aérodynamique avec un corps étranger, comme par exemple un trottoir, le garde-boue risque d'être détérioré et même de se détacher de la caisse du véhicule.

Il est connu de réaliser le garde-boue par injection bi-matière, le corps étant réalisé dans une matière plastique rigide et l'élément aérodynamique étant réalisé dans une matière plastique souple et donc moins dévastatrice si elle subit un choc. Mais cette solution est coûteuse.

Un but de l'invention est de fournir une solution alternative moins coûteuse.

A cet effet, l'invention a pour objet un garde-boue du type précité, caractérisé en ce que l'élément aérodynamique est fixé au corps par des moyens sécables adaptés pour rompre lorsqu'un effort d'une intensité prédéterminée est exercé sur l'élément aérodynamique.

Suivant des modes particuliers de réalisation, le garde-boue comporte l'une ou plusieurs des caractéristiques suivantes, prise(s) isolément ou suivant toutes les combinaisons techniquement possibles :
- les moyens sécables ont un dimensionnement adapté pour un maintien sûr de l'élément aérodynamique dans des conditions normales de fonctionnement ;
- les moyens sécables comprennent au moins une patte sécable reliant le corps et l'élément aérodynamique ;
- le corps comporte une fente, l'élément aérodynamique pénétrant dans la fente du corps, les moyens sécables étant localisés au moins partiellement dans la fente ;
- la fente forme un jour autour de l'élément aérodynamique, la ou chaque patte étant formée par un pont de matière s'étendant transversalement entre le bord de la fente et l'élément aérodynamique ;
- la ou chaque patte est en retrait par rapport au plan de l'ouverture de la fente ; et
- le corps, les moyens sécables et l'élément aérodynamique sont venus de matière et moulés par injection de matière plastique.

L'invention a également pour objet un véhicule automobile, caractérisé en ce qu'il comporte au moins un garde-boue tel que décrit ci-dessus.

Suivant un mode particulier de réalisation, le véhicule automobile comporte des moyens de fixation permettant de fixer le corps du garde-boue sur la caisse du véhicule, les moyens sécables étant adaptés pour rompre avant lesdits moyens de fixation lorsqu'un effort d'une intensité prédéterminée est exercé sur l'élément aérodynamique.

L'invention sera mieux comprise à la lecture de la description qui va suivre, donnée uniquement à titre d'exemple, et faite en se référant aux dessins annexés, sur lesquels:
- la figure 1 est une vue latérale droite d'un véhicule automobile selon l'invention;
- la figure 2 est une vue en perspective de côté et de dessous d'un garde-boue selon l'invention ;
- la figure 3 est une vue de dessous agrandie d'un détail du garde-boue de la figure 2 ; et
- la figure 4 est une vue agrandie d'un détail IV de la figure 3.

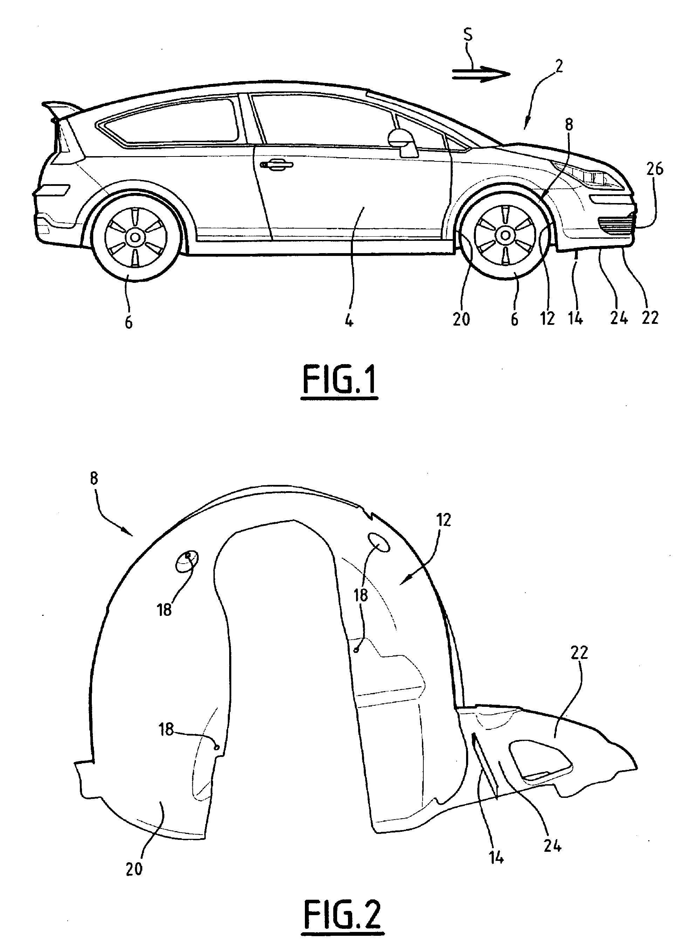

La figure 1 illustre un véhicule automobile 2 muni d'une caisse 4 et de quatre roues 6, avant et arrière.

Dans tout ce qui suit, les termes "avant" et "arrière" sont considérés par rapport au sens usuel de déplacement vers l'avant du véhicule 2 indiqué par la flèche S sur la figure 1. Les termes "longitudinal" et "transversal" sont considérés par rapport au véhicule 2.

Le véhicule 2 comporte en outre deux garde-boue avant 8 entourant chacun une roue avant 6 et évitant les projections de gravillons et/ou de boue sur l'intérieur de la caisse 4.

On décrira maintenant le garde-boue avant droit 8, illustré sur les figures 2 à 4, le garde-boue avant gauche 8 étant son symétrique par rapport à un plan longitudinal médian et vertical du véhicule 2.

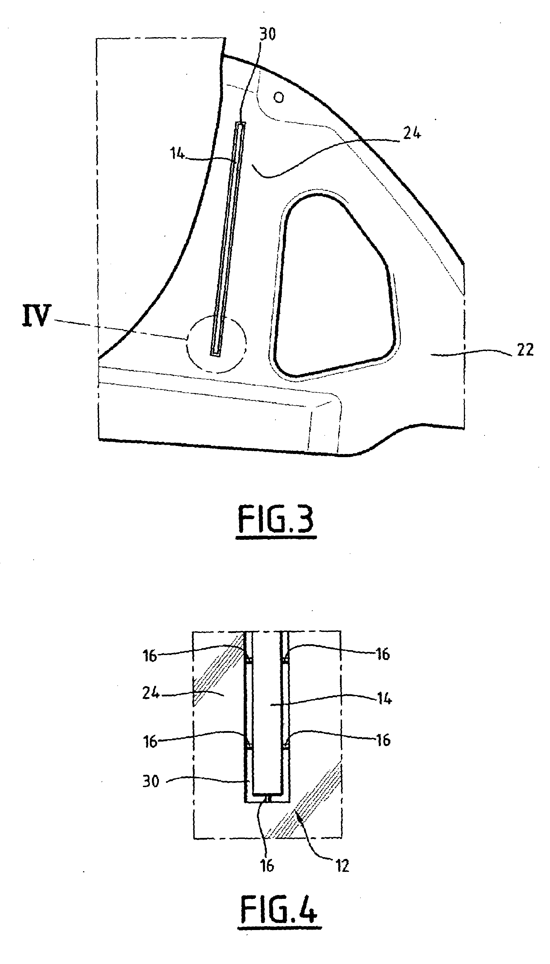

Le garde-boue 8 possède un corps 12 et un élément aérodynamique 14 distinct du corps 12, fixé au corps 12 par des pattes sécables 16, illustrées plus en détail sur la figure 4.

Le corps 12 est fixé sur la caisse 4 au moyen de rivets (non représentés) coopérant avec des trous 18 de fixation correspondants.

Le corps 12 comprend une coiffe 20 fixée dans le passage de roue incurvé de la caisse 4 et entourant la partie supérieure de la roue 6. Les trous de fixation 18 sont ménagés dans la coiffe 20.

Le corps 12 possède également une plaque avant 22 sensiblement horizontale prolongeant la coiffe 20 vers l'avant, jusqu'à un pare-choc avant 26 du véhicule 2.

La plaque 22 présente une surface 24 plane sensiblement horizontale dite "de garde au sol", c'est-à-dire une surface inférieure susceptible d'entrer en contact avec le sol lors de l'utilisation du véhicule 2.

L'élément aérodynamique 14 forme une bavette sensiblement transversale rigide et sensiblement parallélépipédique, pénétrant une fente parallélépipédique 30 ménagée dans la plaque 22. L'élément aérodynamique 14 est en position médiane dans la fente 30, et la fente 30 forme ainsi un jour autour de la périphérie de l'élément 14. En outre, il existe un jour entre la fente 30 et l'extrémité de l'élément 14 disposée au plus près de la fente 30, si bien que l'élément 14 et la fente 30 ne sont pas en contact.

L'élément 14 fait saillie vers le sol par rapport à la surface de garde au sol 24.

L'élément aérodynamique 14 est adapté pour dévier une partie du vent relatif se dirigeant vers la roue avant droite 6, vers l'entre deux roues 6, et ainsi réduire la traînée de la roue avant droite 6. L'élément aérodynamique 14 est par exemple légèrement incliné par rapport à un axe transversal du véhicule 2.

L'élément 14 a par exemple une longueur mesurée dans la direction transversale comprise entre 150 et 200 mm, et une hauteur mesurée dans la direction verticale comprise entre 25 et 30 mm.

Les pattes 16 sont localisées dans la fente 30 et s'étendent entre la plaque 22 et l'élément 14.

Les pattes 16 s'étendent transversalement à la surface de l'élément aérodynamique 14 et sont réparties à sa périphérie. Elles relient le bord de la fente 30 à une extrémité de l'élément aérodynamique 14 et sont en retrait par rapport au plan de l'ouverture de la fente 30.

Les pattes 16 sont adaptées pour rompre lorsqu'un effort d'une intensité prédéterminée est appliqué sur l'élément 14, plus particulièrement elles sont adaptées pour rompre avant les moyens de fixation du corps 12 sur la caisse 4 constitués par les rivets et les trous 18.

En outre, les pattes 16 ont un dimensionnement adapté pour un maintien sûr de l'élément 14 dans des conditions normales de fonctionnement, et notamment lors d'un passage à gué du véhicule 2.

Les pattes 16 ont par exemple une forme sensiblement parallélépipédique, et une section présentant un diamètre moyen par exemple compris entre 1 et 1, 5 mm.

Le corps 12, l'élément 14 et les pattes 16 sont venues de matière. Ils sont moulés par injection de matière plastique. Il s'agit par exemple de polypropylène (PP).

Avec l'invention, les pattes sécables 16 assurent le détachement de l'élément 14 par rapport au corps 12 lors d'un choc important avec un corps étranger, comme par exemple avec un trottoir. Grâce à cette rupture, le corps 12 du garde-boue 8 ne s'endommage pas, de même que sa fixation sur la caisse 4.

En outre, la simplicité de fabrication et le choix du matériau assurent un coût réduit.

En variante, l'élément aérodynamique 14 a une forme de tout type connu adapté.

En variante, l'élément aérodynamique 14 peut être disposé à un autre endroit approprié du garde-boue.

## Revendications

1. Garde-boue (8) de véhicule automobile (2), du type comportant :
- un corps (12) présentant une surface (24) ; et
- un élément aérodynamique rigide (14) distinct dudit corps (12), l'élément aérodynamique (14) étant destiné à faire saillie par rapport à ladite surface (24),
**caractérisé en ce que** l'élément aérodynamique (14) est fixé au corps (12) par des moyens sécables (16) adaptés pour rompre lorsqu'un effort d'une intensité prédéterminée est exercé sur l'élément aérodynamique (14).

2. Garde-boue (8) selon la revendication 1, **caractérisé en ce que** les moyens sécables (16) ont un dimensionnement adapté pour un maintien sûr de l'élément aérodynamique (14) dans des conditions normales de fonctionnement.

3. Garde-boue (8) selon la revendication 1 ou 2, **caractérisé en ce que** les moyens sécables comprennent au moins une patte sécable (16) reliant le corps (12) et l'élément aérodynamique (14).

4. Garde-boue (8) selon l'une quelconque des revendications précédentes, **caractérisé en ce que** le corps (12) comporte une fente (30), l'élément aérodynamique (14) pénétrant dans la fente (30) du corps (12), les moyens sécables (16) étant localisés au moins partiellement dans la fente (30).

5. Garde-boue selon la revendication 4 prise ensemble avec la revendication 3, **caractérisé en ce que** la fente (30) forme un jour autour de l'élément aérodynamique (14), la ou chaque patte (16) étant formée par un pont de matière s'étendant transversalement entre le bord de la fente (30) et l'élément aérodynamique (14).

6. Garde-boue (8) selon la revendication 5 ou la revendication 4 prise ensemble avec la revendication 3, **caractérisé en ce que** la ou chaque patte (16) est en retrait par rapport au plan de l'ouverture de la fente (30).

7. Garde-boue (8) selon l'une quelconque des revendications précédentes, **caractérisé en ce que** le corps (12), les moyens sécables (16) et l'élément aérodynamique (14) sont venus de matière et moulés par injection de matière plastique.

8. Véhicule automobile (2), **caractérisé en ce qu'**il comporte au moins un garde-boue (8) selon l'une quelconque des revendications précédentes.

9. Véhicule automobile (2) selon la revendication 8, **caractérisé en ce qu'**il comporte des moyens de fixation (18) permettant de fixer le corps (12) du garde-boue (8) sur la caisse (4) du véhicule, les moyens sécables (16) étant adaptés pour rompre avant lesdits moyens de fixation (18) lorsqu'un effort d'une intensité prédéterminée est exercé sur l'élément aérodynamique (14).

## Claims

1. A mudguard (8) of a motor vehicle (2), of the type comprising:
- a body (12) having a surface (24); and
- a rigid aerodynamic element (14) distinct from the said body (12), the aerodynamic body (14) being intended to project with respect to the said surface (24),
**characterized in that** the aerodynamic element (14) is fixed to the body (12) by divisible means (16) adapted to break when a stress of a predetermined intensity is exerted on the aerodynamic element (14).

2. The mudguard (8) according to Claim 1, **characterized in that** the divisible means (16) have an adapted dimension for a secure maintaining of the aerodynamic element (14) under normal operating conditions.

3. The mudguard (8) according to Claim 1 or 2, **characterized in that** the divisible means comprise at least one divisible tab (16) connecting the body (12) and the aerodynamic element (14).

4. The mudguard (8) according to any one of the preceding claims, **characterized in that** the body (12) comprises a slot (30), with the aerodynamic element (14) penetrating in the slot (30) of the body (12), the divisible means (16) being located at least partially in the slot (30).

5. The mudguard according to Claim 4, taken together with Claim 3, **characterized in that** the slot (30) forms an opening around the aerodynamic element (14), the or each tab (16) being formed by a bridge of material extending transversely between the edge of the slot (30) and the aerodynamic element (14).

6. The mudguard (8) according to Claim 5 or Claim 4 taken together with Claim 3, **characterized in that** the or each tab (16) is recessed with respect to the plane of the opening of the slot (30).

7. The mudguard (8) according to any one of the preceding claims, **characterized in that** the body (12), the divisible means (16) and the aerodynamic element (14) are formed of a single piece and moulded by injection of plastic material.

8. A motor vehicle (2), **characterized in that** it comprises at least one mudguard (8) according to any one of the preceding claims.

9. The motor vehicle (2) according to Claim 8, **characterized in that** it comprises fixing means (18) allowing the body (12) of the mudguard (8) to be fixed on the body (4) of the vehicle, the divisible means (16) being adapted to break before the said fixing means (18) when a stress of a predetermined intensity is exerted on the aerodynamic element (14).

## Patentansprüche

1. Kotflügel (8) für Kraftfahrzeug (2) des Typs, der Folgendes aufweist:
- einen Körper (12), der eine Fläche (24) aufweist; und
- ein starres aerodynamisches Element (14), das von dem Körper (12) getrennt ist, wobei das aerodynamische Element (14) dazu bestimmt ist, in Bezug auf die Fläche (24) vorzustehen,
**dadurch gekennzeichnet, dass** das aerodynamische Element (14) an dem Körper (12) durch trennbare Mittel (16) befestigt ist, die brechen können, wenn eine Kraft mit vorbestimmter Stärke auf das aerodynamische Element ausgeübt wird.

2. Kotflügel (8) nach Anspruch 1, **dadurch gekennzeichnet, dass** die trennbaren Mittel (16) eine Bemessung haben, die für ein sicheres Halten des aerodynamischen Elements (14) unter normalen Betriebsbedingungen geeignet ist.

3. Kotflügel (8) nach Anspruch 1 oder 2, **dadurch gekennzeichnet, dass** die trennbaren Mittel mindestens eine trennbare Pratze (16) aufweisen, die den Körper (12) und das aerodynamische Element (14) verbinden.

4. Kotflügel (8) nach einem der vorhergehenden Ansprüche, **dadurch kennzeichnet, dass** der Körper (12) einen Schlitz (30) aufweist, wobei das aerodynamische Element (14) in den Schlitz (30) des Körpers (12) eindringt, wobei die trennbaren Mittel (16) mindestens teilweise in dem Schlitz (30) liegen.

5. Kotflügel nach Anspruch 4 gemeinsam mit Anspruch 3, **dadurch gekennzeichnet, dass** der Schlitz (30) einen Durchbruch um das aerodynamische Element (14) bildet, wobei die oder jede Pratze (16) durch eine Materialbrücke gebildet ist, die sich quer zwischen dem Rand des Schlitzes (30) und dem aerodynamischen Element (14) erstreckt.

6. Kotflügel (8) nach Anspruch 5 oder Anspruch 4 gemeinsam mit Anspruch 3, **dadurch gekennzeichnet, dass** die oder jede Pratze (16) in Bezug zu der Ebene der Öffnung des Schlitzes (30) rückwärts versetzt ist.

7. Kotflügel (8) nach einem der vorhergehenden Ansprüche, **dadurch gekennzeichnet, dass** der Körper (12), die trennbaren Mittel (16) und das aerodynamische Element (14) aus einem Stück gebildet und durch Kunststoffspritzguss geformt werden.

8. Kraftfahrzeug (2), **dadurch gekennzeichnet, dass** es mindestens einen Kotflügel (8) nach einem der vorhergehenden Ansprüche aufweist.

9. Kraftfahrzeug (2) nach Anspruch 8, **dadurch gekennzeichnet, dass** es Befestigungsmittel (18) aufweist, die es erlauben, den Körper (12) des Kotflügels (8) auf der Karosserie (4) des Fahrzeugs zu befestigen, wobei die trennbaren Mittel (16) vor den Befestigungsmitteln (18) brechen können, wenn eine Kraft mit einer vorbestimmten Stärke auf das aerodynamische Element (14) ausgeübt wird.
